# EUROPEAN PATENT APPLICATION

(11) **EP 4 484 883 A1**
(43) Date of publication of application: **01.01.2025**
(21) Application number: 24184649.2
(22) Date of filing: 26.06.2024
(51) Int. Cl.: F41G 11/00

(54) **POWER AND DATA INTERFACE FOR WEAPON ACCESSORY MOUNTING RAIL**

(30) Priority: 28.06.2023 US 202363523767 P
(71) Applicant: Wilcox Industries Corp., Newington, NH 03801 (US)
(72) Inventor: TEETZEL, James W., Newington, NH 03801 (US); TURNER, Elliott S., Newington, NH 03801 (US)
(74) Representative: FRKelly

(57) **Abstract**

A system and method for connecting a weapon-mounted accessory to a computer comprises a first data and power port configured to provide data and power transmission between the computer and the weapon-mounted accessory. The first data and power port is configured to detachably couple to a slot in a slot rail weapon interface. In a further aspect, one or more additional data and power ports are capable of providing data and power transmission between the computer and one or more additional weapon-mounted accessories. Each of the one or more additional data and power ports is configured to detachably couple to a slot in a slot rail weapon interface. The first data and power port and the one or more additional data and power ports are configured to be operably connected to each other to form a serial chain in a custom configuration of data and power ports.

## Description

### CROSS REFERENCE TO RELATED APPLICATION

This application claims the priority benefit of U.S. provisional application no. 63/523,767 filed June 28, 2023. The aforementioned application is incorporated here by reference in its entirety.

### BACKGROUND

The present invention relates to a weapon mounting system, and more particularly to a system and method for providing electrical and data connections on a weapon, e.g., firearm, mount.

Advantages and benefits of the present invention will become apparent to those of ordinary skill in the art upon reading and understanding the following detailed description of the preferred embodiments.

### SUMMARY

In one aspect, a system for connecting a weapon-mounted accessory to a computer comprises a first data and power port configured to operably connect to the computer, the first data and power port being capable of providing data and power transmission between the computer and the weapon-mounted accessory. The first data and power port is configured to detachably couple to a slot in a slot rail weapon interface.

In a more limited aspect, the first data and power port includes a housing having a peripheral flange disposed on an exterior facing side of the first data and power port and at least one rotating tab which cooperates with the peripheral flange to define a channel therebetween. The at least one rotating tab rotatable between a first position wherein the at least one rotating tab extends generally perpendicular to the longitudinal axis of the slot and is configured to permit insertion and removal of the first data and power port with respect to the slot and a second position wherein the at least one rotating tab extends generally parallel to the longitudinal axis of the slot and is configured to secure a rim of the slot within the channel to retain the first data and power port within the slot.

In another more limited aspect, the housing further includes an integral latch for detachably engaging a complementary catch latch disposed on the weapon-mounted accessory.

In another more limited aspect, the first data and power port includes a housing having a peripheral flange disposed on an exterior facing side of the first data and power port and a pair of axially spaced apart rotating tabs, each of the rotating tabs cooperating with the peripheral flange to define a channel therebetween. Each of the rotating tabs rotatable between a first position wherein the rotating tabs extend generally perpendicular to the longitudinal axis of the slot and are configured to permit insertion and removal of the first data and power port with respect to the slot and a second position wherein the tabs extend generally parallel to the longitudinal axis of the slot and are configured to secure a rim of the slot within the channel to retain the first data and power port within the slot.

In another more limited aspect, the system further comprises one or more additional data and power ports, each additional data and power port being capable of providing data and power transmission between the computer and one or more additional weapon-mounted accessories. Each of the one or more additional data and power ports is configured to detachably couple to a slot in a slot rail weapon interface. The first data and power port and the one or more additional data and power ports are configured to be operably connected to each other to form a serial chain in a custom configuration of data and power ports. The custom configuration of data and power ports enables simultaneous data and power transmission between the computer, the accessory connected to the first data and power port, and each of the one or more additional accessories connected to the one or more additional data and power ports.

In another more limited aspect, the system is provided in combination with the computer.

In another more limited aspect, the computer is configured to detachably couple to a slot in the slot rail weapon interface.

In another more limited aspect, the computer includes a battery pack interface for detachably and operatively coupling a battery pack to the computer, wherein the computer is configured to electrically couple the battery pack to the first data and power port when the battery pack coupled to the battery pack interface.

In another more limited aspect, the system is provided in combination with the battery pack.

In another more limited aspect, the battery pack interface is a Small Tactical Universal Battery (STUB) interface.

In another more limited aspect, the system further comprises a weapon handguard configured to surround a barrel of a weapon, wherein the slot rail weapon interface is disposed on the handguard.

In another more limited aspect, the system further comprises a cable for electrically coupling the first data and power port to the computer, wherein at least a portion of the cable is configured to pass within an interior space defined by the handguard.

In another more limited aspect, the first data and power port includes a housing configured to be positioned over the slot in the slot rail weapon interface and a first retention clip coupled to the housing and configured to detachably engage with a first like slot adjacent the slot. A second retention clip is coupled to the housing and is configured to detachably engage with a second like slot which is adjacent the slot and opposite the first like adjacent slot. An electrical power and data cable is configured to pass through the slot.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of a handguard system in accordance with an exemplary embodiment.
FIG. 2 is a fragmentary side view of the handguard system appearing in FIG. 1.
FIG. 3 is a side view of the control module and connector inserts appearing in FIG. 2, with the hand guard removed for ease of exposition.
FIG. 4 is a side view of the handguard appearing in FIG. 1 with an alternate configuration of inserts.
FIG. 5 is a side view of the handguard system appearing in FIG. 4 with a first embodiment battery pack attached.
FIG. 6 is a side view of the handguard system appearing in FIG. 4 with a second embodiment battery pack attached.
FIG. 7 is an enlarged isometric view of an insert according to a first exemplary embodiment.
FIG. 8 is an enlarged isometric view of an insert according to a second exemplary embodiment.
FIG. 9 is a side cross sectional view of an insert attached to a slot of a slot rail system.
FIG. 10 is a side view of the embodiment appearing in FIG. 1 with two example accessories mounted to the inserts.
FIG. 11 is a side cross sectional view of a first example accessory which, in turn, is electrically coupled to an insert attached to a slot of a slot rail system.
FIG. 12 is a side cross sectional view of a second example accessory which, in turn, is electrically coupled to an insert attached to a slot of a slot rail.
FIG. 13 is a top view of an example insert.
FIG. 14 is a side partial cross sectional view of the insert appearing in FIG. 13.
FIG. 15 is an isometric view of the insert appearing in FIG. 13.
FIG. 16 is a side view of a handguard having an alternative embodiment accessory mount which has an integral connector and is the handguard thereto without the need for an insert.
FIG. 17 is a cross sectional view taken along the lines 17--17 appearing in FIG. 16.
FIG. 18 is an exploded, isometric view of the handguard and accessory appearing in FIG. 16.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

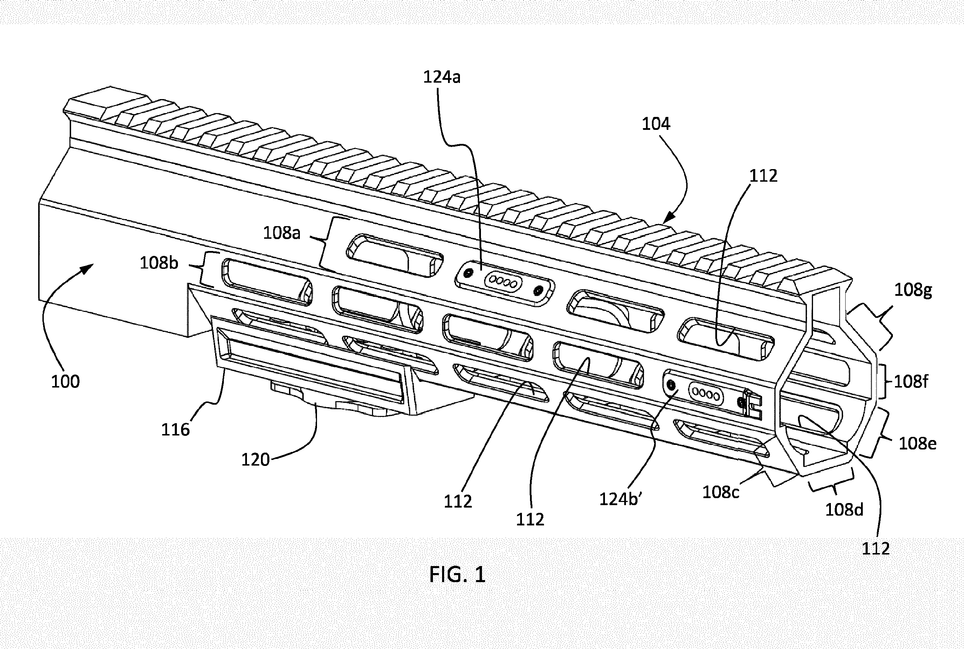

Referring now to the drawings, FIG. 1 shows an exemplary handguard **100.** In the illustrated embodiment, the handguard **100** includes an upper Picatinny rail interface portion **104** and one or more slot rail portions **108a-108g** for mounting one or more accessories to the weapon for increased functionality of the weapon, such as scopes, sights, lasers, rangefinders, and others. The slot rail interface portions **108a-108g** may comprise M-LOK(TM) (Magpul Industries Corp., Austin, TX) compatible mounting interface or similar system.

Each slot rail portion includes a series of apertures or slots **112** which are configured to receive an M-LOK or similar accessory or fastener. In the illustrated embodiment, a computer or control module **116** is attached to the section **108d** via the slots **112** thereon. The control module **116** includes a bayonet style battery interface **120** for connecting a power supply (not shown). The control module **116** includes a processor and wireless interface for management of data communications with one or more power and data ports or inserts **124a, 124b'** as will be described in greater detail below. The position of the arrangement of the control module **116** and the power and data ports can be selected by the user to form a custom configuration of data and power ports, e.g., in accordance with the functionality desired by the user.

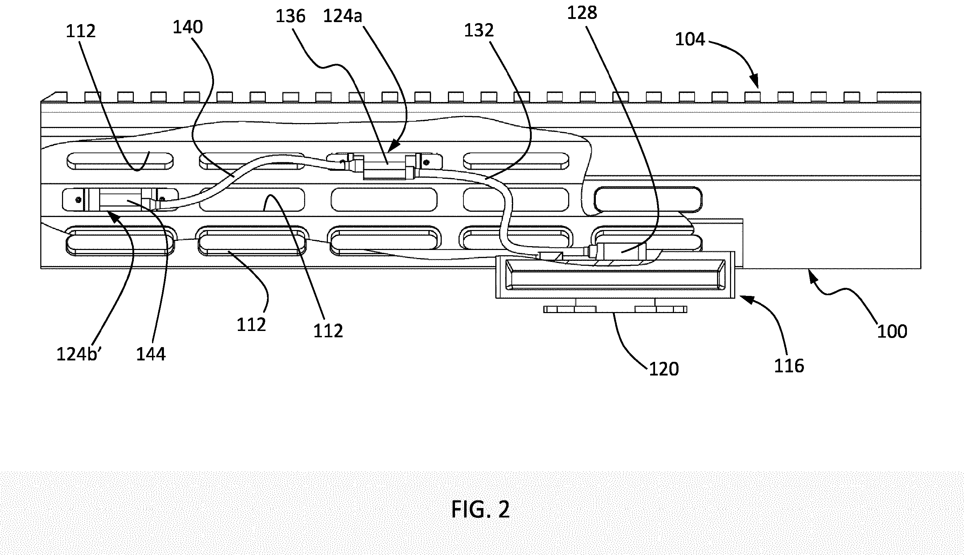

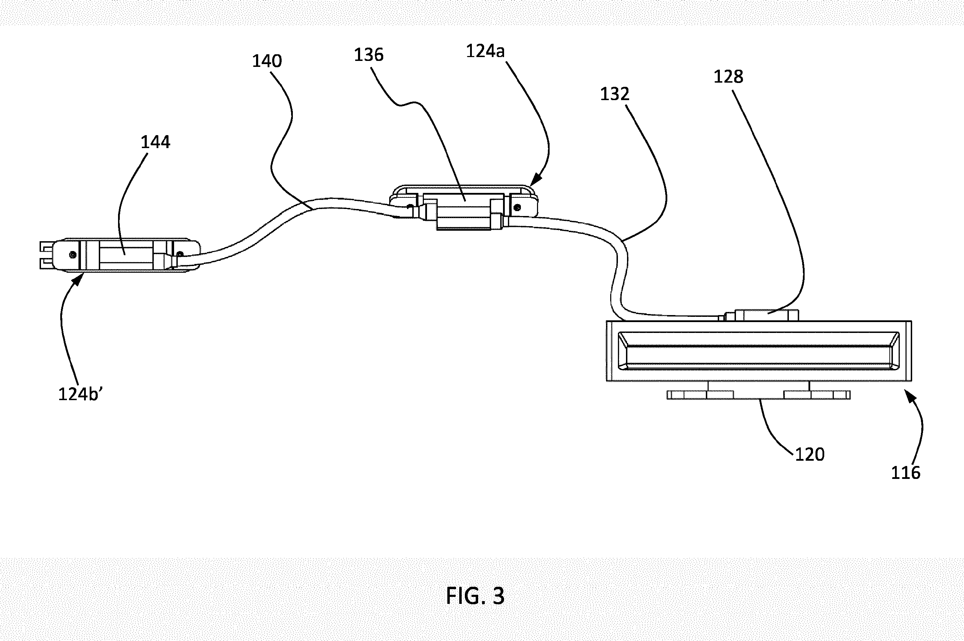

Referring now to FIGS. 2 and 3, and with continued reference to FIG. 1, the control module **116** is secured via to a slot **112** and includes a connector element **128** which extends through the slot **112** into the interior of the handguard **100.** The connector element **128** is coupled to a cable **132.** The cable **132** in turn is coupled to a connector element **136** on the first insert **124a.** The connector element **136,** in turn, is coupled to a cable **140.** The cable **140,** in turn, is coupled to a connector element **144** on the second insert **124b'.**

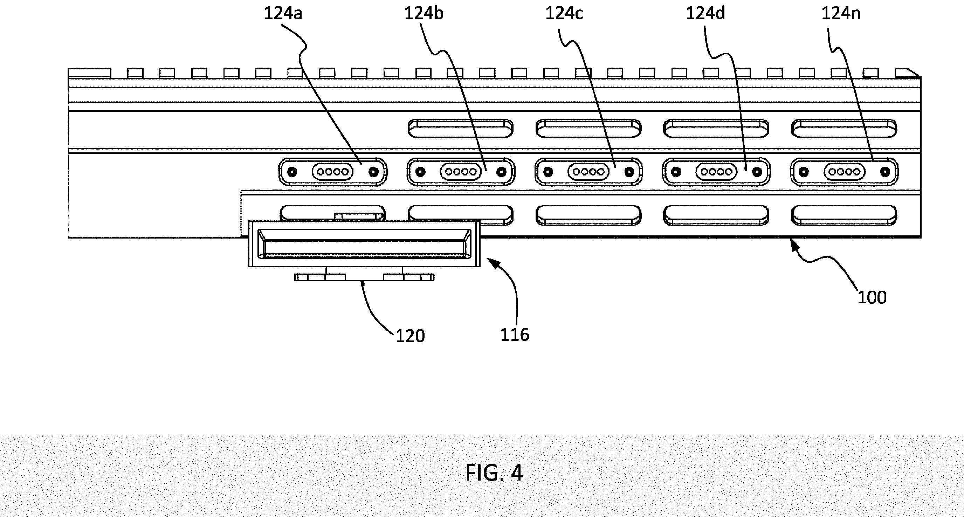

In this manner, the inserts **124a** and **124b'** are daisy-chained, thereby allowing simultaneous power and data connections to the controller **116.** As illustrated in FIGS. 4-6, any number of inserts **124a, 124b, 124c, 124d,** up to *n* inserts **124n,** may be utilized, where *n* is any integer, limited only by the number of available slots **112.** Each insert **124a-124n** acts as an input and output, enabling the connection of multiple devices in a linear fashion. This daisy-chaining capability eliminates the need for complex wiring configurations or additional hubs, streamlining the setup process and providing an efficient solution for managing multiple accessory devices. In operation, the user identifies which slots **112** on the handguard **100** where they will mount their accessories based on their desired location. The chosen slots **112** have the inserts **124a-124n** installed into them as will be described below. The inserts are connected to each other via daisy chain and then to the control module **116.**

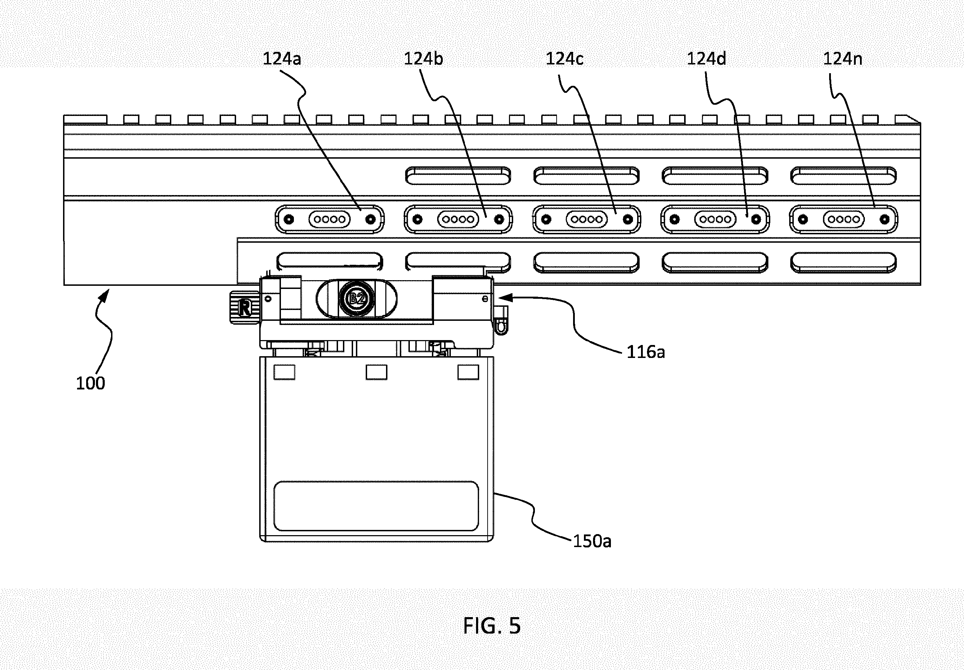

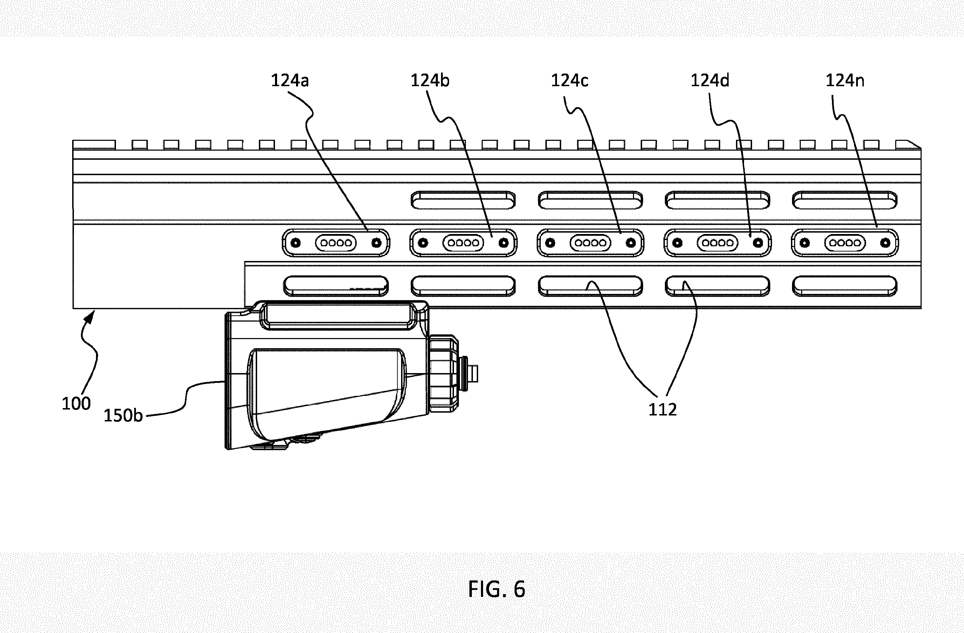

FIG. 5 illustrates a further embodiment, wherein a Small Tactical Universal Battery (STUB) rechargeable battery pack **150a** is attached to the handguard **100** via an alternative embodiment controller **116a.** FIG. 6 illustrates yet another embodiment, wherein a FUSION(TM) CR123a battery pack **150b** (Wilcox Industries Corp., Newington, NH) is attached to the handguard **100** via one of the slots **112.**

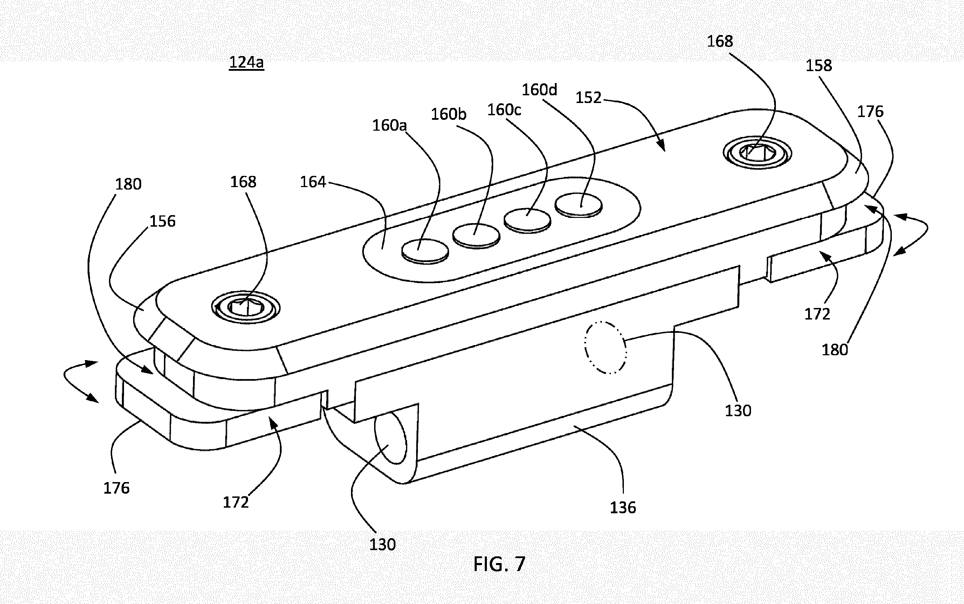

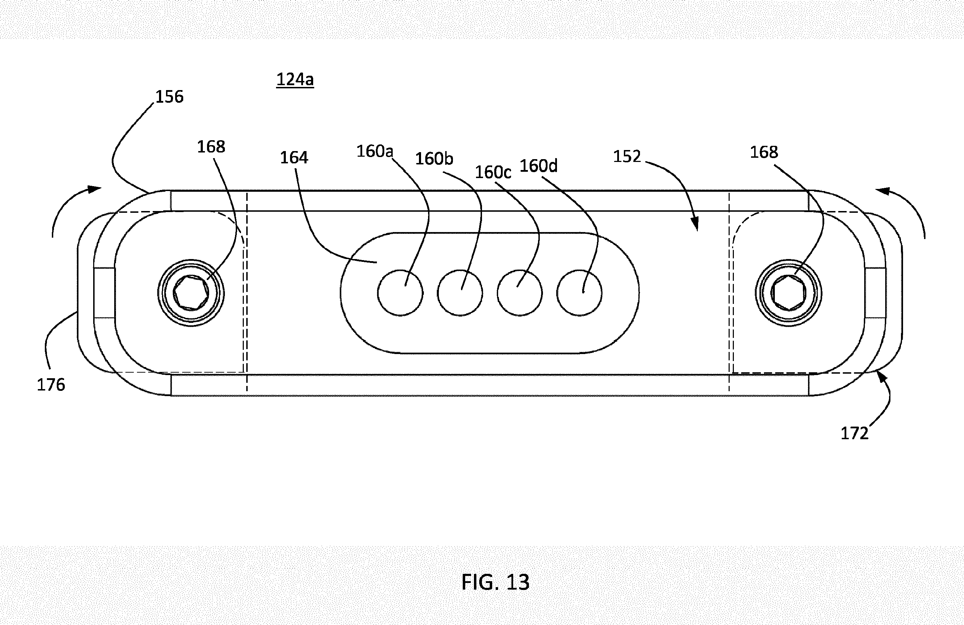

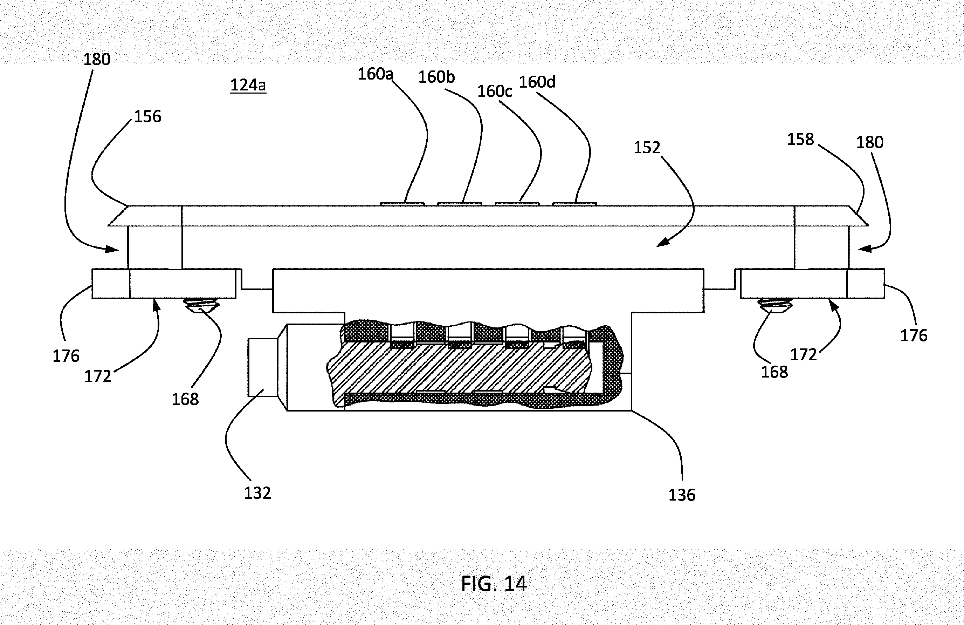

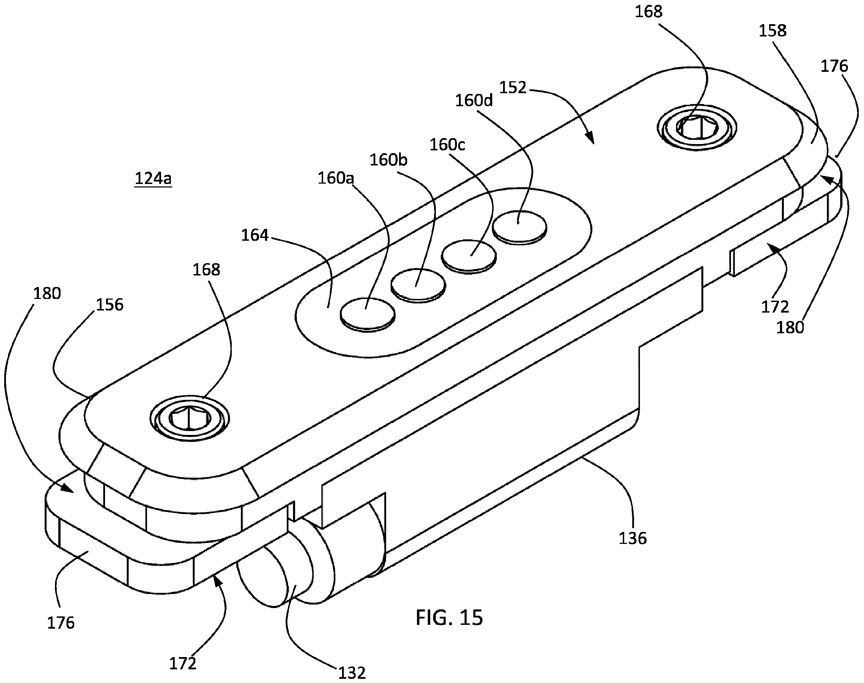

Referring now to FIGS. 7, 9 and 13-15, there are several views of an insert **124a.** The insert **124a** includes a housing **152** having an upper peripheral flange **156.** In embodiments, the peripheral flange has a beveled edge **158** which provides smoother profile, thereby reducing snagging potential and improving ergonomics and comfort when handling and manipulating the weapon. The housing **152** is attached to the connector element **128** which includes cable connectors **130** for cable connection to the controller **120** and/or an adjacent insert in the chain. Electrical contacts **160a-160b** are potted within an electrical insulator block **160** and electrically coupled to the connectors **130** for transmitting power and data signals.

In embodiments, the contact **160a** is a ground (GND) pad used as a reference point for electrical potential and common return path for the circuit. In operation, the contact **160a** is electrically coupled to the ground (e.g., negative) terminal of the power supply **150a, 150b,** etc. In embodiments, the contact pads **160b** and **160c** are coupled to data plus (D+) and data minus (D-) data lines, respectively, which carry the positive and negative signals respectively, for transmitting data between devices in accordance with a digital communication protocol. The digital communication protocol and corresponding connectors may be adapted to accommodate any communication protocol that is suitable for low speed data communication. This includes, without limitation, various protocols such as Universal Serial Bus (USB), General Purpose Input/Output (GPIO), Serial Peripheral Interface (SPI), Inter-Integrated Circuit (I2C), Universal Asynchronous Receiver-Transmitter (UART), and Apple Lightening. In embodiments, the contact **160d** is a voltage common collector (VCC) contact which is electrically coupled to the power supply voltage (e.g., positive) terminal of the power supply **150a, 150b,** etc.

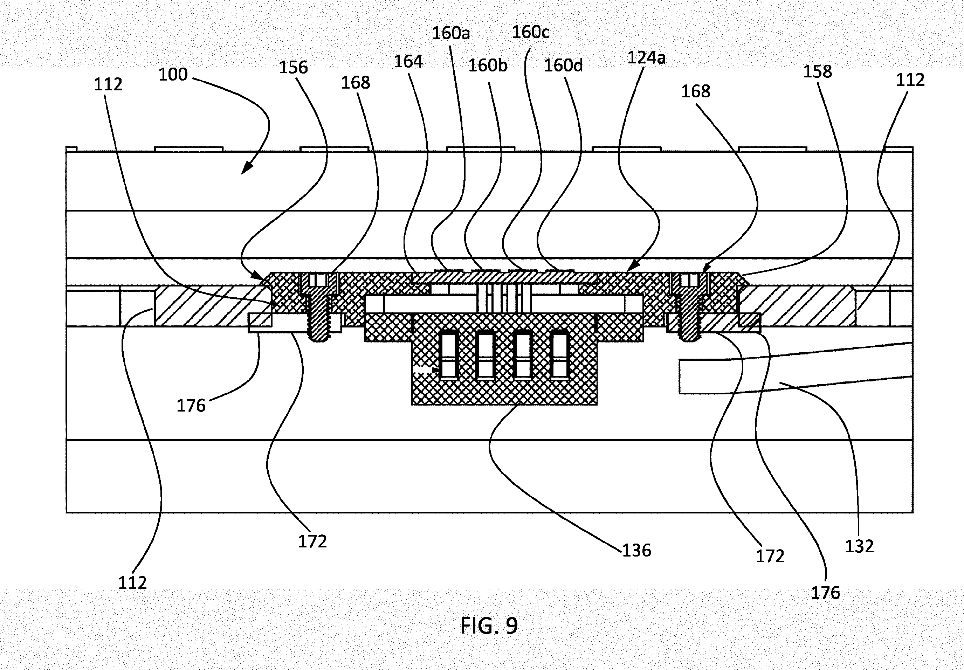

Threaded fasteners **168** engage rotatable retention clips **172** which are rotatable in the direction of the arrows appearing in FIG. 7. The retention clips **172** include an extending tab portion **176** which cooperate with the peripheral flange **156** to define a channel **180** at each end. Rotation of the fastener **168** allows for selectively tightening/clamping and loosening/unclamping the insert within a slot **112,** as best seen in FIG. 9. The corners of the retention clips **172** can be selectively radiused or rounded to permit the clips **172** to rotate when the threaded fasteners **168** are rotated and squared to act as stops to prevent rotation of the clips **172** when the threaded fasteners **168** are rotated, i.e., depending on the direction of rotation and current position of the clips **172.**

In operation, to secure the insert **124a** within a slot, the fasteners **168** are rotated so that the tabs **176** extend in a direction perpendicular to the longitudinal axis of the slot, such that the insert **124a** can pass through the slot opening. Once inserted, the tabs **176** are rotated 90 degrees via the fasteners **168** to become parallel to the longitudinal axis of the slot, thereby extending beyond the opposing ends of the slot to securely retain the insert **124a** in place. In this manner, the rim of the slot is captured within the channel **180** between the tab **176** and the peripheral flange **156.** To remove the insert **124a** from the slot, the process is reversed.

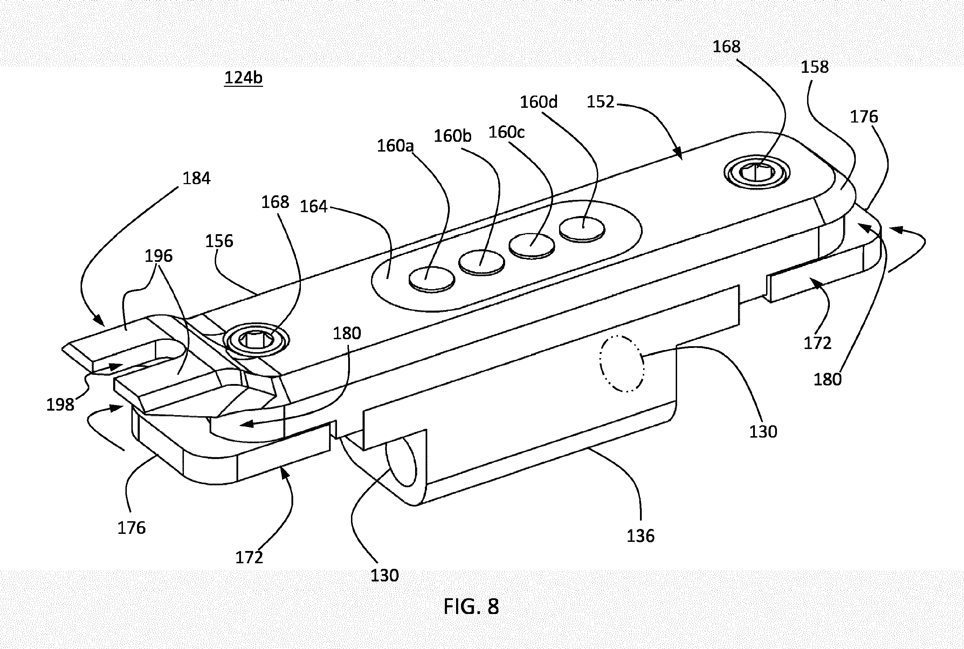

Referring now to FIG. 8, there is shown an alternative insert **124b'** which as described above with respect to the insert **124a** appearing in FIG. 7, except that the housing **152** further includes an accessory retention hook or latch **184,** the function of which will be described in greater detail below.

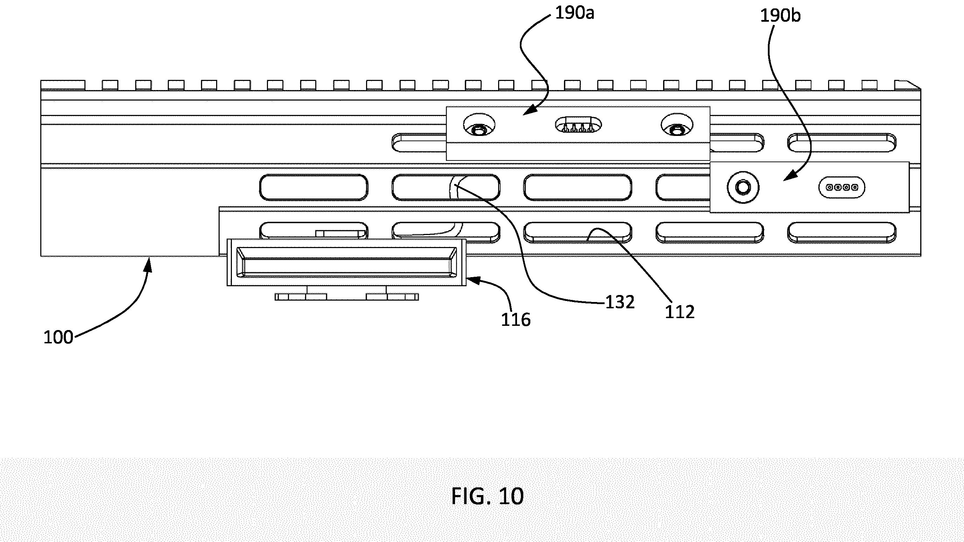

Referring now to FIG. 10, there is shown a handguard **100** having a first accessory **190a** which can be attached to the insert **124a** and a second accessory **190b** which can be attached to the insert **124b'.**

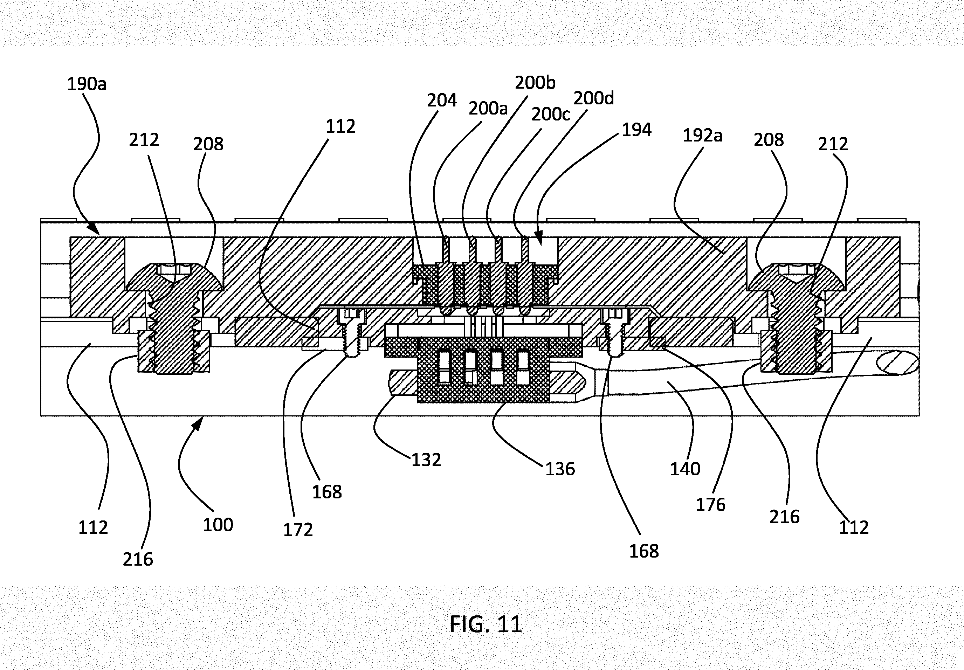

Referring now to FIG. 11, there appears a cross-sectional view showing the accessory **190a** which has a housing **192a.** An electrical connector **194** is formed in the housing **192a** and includes an insulator **204** and electrical contacts **200a-200d,** which engage the respective contacts **160a-160d** on the insert **124a.** In embodiments, the electrical contacts **200a-200d** are contact pins, such as spring loaded or pogo pins.

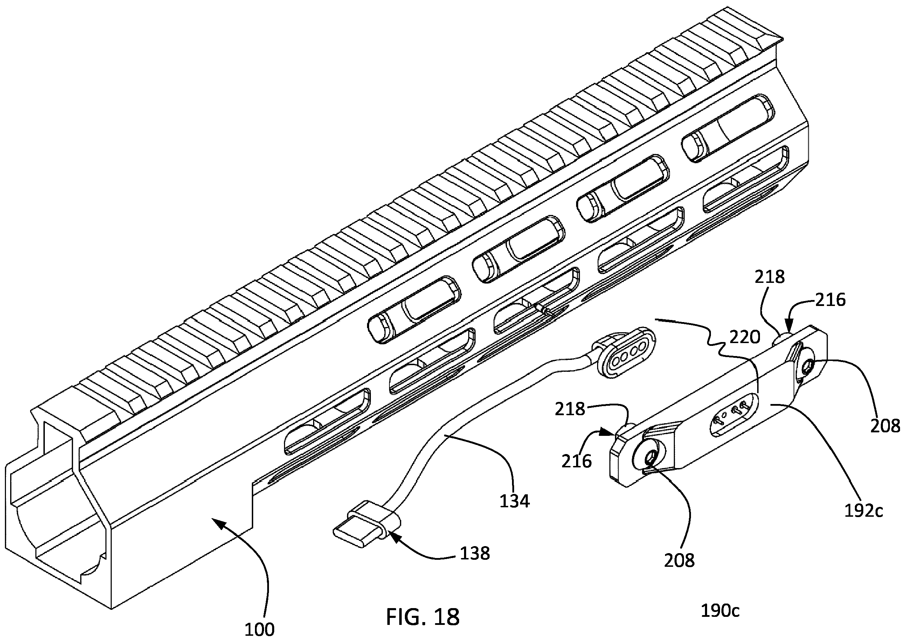

The accessory **190a** is secured over the insert **124a** utilizing the adjacent slot **112** on either side of the insert **124a.** Threaded fasteners **208** pass through apertures **212** in the housing **192a** and engage slot rail (e.g., M-LOK) retention clips **216,** which may be conventional T-nuts utilized in connection with M-LOK rail interface slots. The T-nuts **216** include elongated tabs or flanges **218** (see FIG. 18) which are rotatable with the screw **208** as understood by persons skilled in the art. In operation, the T-nuts **216** are rotated so that the long axis of the tabs are parallel to the long axis of the slots **112.** The screws **208** are then rotated to cause the T-nuts **216** to rotate until the long axis of the tabs are perpendicular to the long axis of the slots **112** to secure the accessory **190a** in place. In embodiments, the shaft portion of the T-nuts **216** are provided with rounded corners and nonrounded corners to constrain rotation of the T-nuts **216** between the parallel and perpendicular positions in relation to the slots **112.**

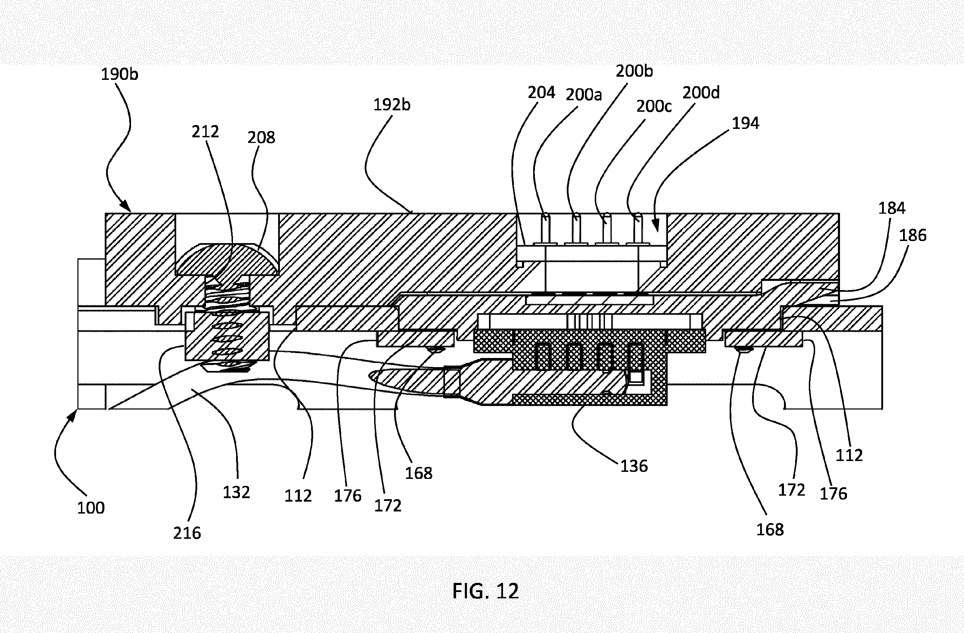

Referring now to FIG. 12, there appears a cross-sectional view showing the accessory **190b** which has a housing **192b.** An electrical connector **194** is formed in the housing **192b** and includes an insulator block **204** and electrical contacts **200a-200d,** which engage the respective contacts **160a-160d** on the insert **124b'.** In embodiments, the electrical contacts **200a-200d** are contact pins, such as spring loaded or pogo pins.

The accessory **190b** is secured over the insert **124b'** utilizing an adjacent slot **112** one side of the insert **124b'** and the accessory retention hook or latch **184** disposed on the accessory housing **152** at the opposite side of the insert **124b'.** Thus, whereas the accessory **190a** and the associated insert **124a** shown in FIG. 11 occupy three slots **112** on the handguard **100,** the accessory **190b** and insert **124b'** only occupy two slots **112** on the handguard **100.**

In embodiments, the accessory retention hook or latch **184** includes two prongs **196** defining a notch **198** between them. The accessory retention hook or latch **184** engages a complementary catch or receptacle **186** disposed on one end of the accessory housing **192b.** At the other end of the housing **192b,** a threaded fastener **208** passes through an aperture **212** in the housing **192b** and engages a slot rail T-nut **216.** The T-nut **216** includes elongated tabs or flanges which are rotatable with the screw **208** as understood by persons skilled in the art. In operation, the T-nut **216** is rotated so that the long axis of the tabs are parallel to the long axis of the slots **112.** The screw **208** is then rotated to cause the T-nut **216** to rotate until the long axis of the tabs are perpendicular to the long axis of the slot **112** to secure the accessory **190b** in place. In embodiments, the shaft portion of the T-nuts **216** are provided with rounded corners and nonrounded corners to constrain rotation of the T-nut **216** between the parallel and perpendicular positions in relation to the slot **112.**

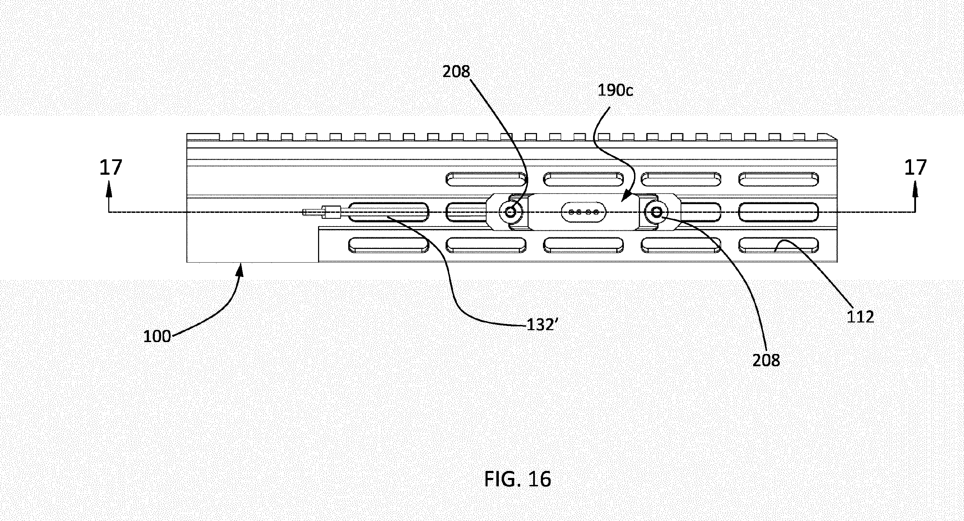

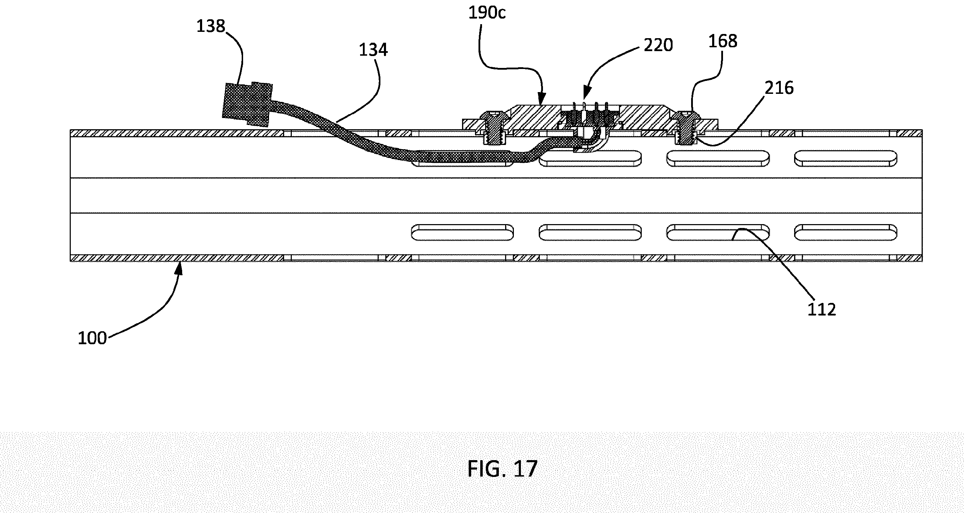

Referring now to FIGS. 16-18, there is shown an accessory device **190c** in accordance with a third embodiment, which can serve as an alternative data and power port which does not require the use of an insert **124a-124n.** The accessory device **190c** includes a housing **192c** and an electrical connector **220** having GND, D+, D-, and VCC pins or terminals as described above. The connector **220** is electrically coupled to a cable **134** having a connector end **138,** which is configured for connection to control module, such as the control module **116,** or other computer-based processing system. The cable **134** can be routed under the handguard **110** as needed. The housing **192c** includes openings receiving threaded fasteners **168** which engage rotatable retention clips **216,** which may be, e.g., a conventional M-LOK T-nut. In the illustrated embodiment, the housing **192c** is positioned over a central slot and the rotatable retention clips **216** each engage an adjacent slot on opposing side of the central slot, wherein the cable **134** passes into the interior space defines by the handguard through central slot.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims or the equivalents thereof.

## Claims

1. A system for connecting a weapon-mounted accessory to a computer, comprising:
a first data and power port configured to operably connect to the computer, the first data and power port being capable of providing data and power transmission between the computer and the weapon-mounted accessory;
wherein the first data and power port is configured to detachably couple to a slot in a slot rail weapon interface.

2. The system of claim 1, further comprising:
said first data and power port including a housing having a peripheral flange disposed on an exterior facing side of the first data and power port and at least one rotating tab which cooperates with the peripheral flange to define a channel therebetween;
said at least one rotating tab rotatable between a first position wherein the at least one rotating tab extends generally perpendicular to the longitudinal axis of the slot and is configured to permit insertion and removal of the first data and power port with respect to the slot and a second position wherein the at least one rotating tab extends generally parallel to the longitudinal axis of the slot and is configured to secure a rim of the slot within the channel to retain the first data and power port within the slot.

3. The system of claim 2, wherein the housing further includes an integral latch for detachably engaging a complementary catch latch disposed on the weapon-mounted accessory.

4. The system of any of the preceding claims, further comprising:
said first data and power port including a housing having a peripheral flange disposed on an exterior facing side of the first data and power port and a pair of axially spaced apart rotating tabs, each of the rotating tabs cooperating with the peripheral flange to define a channel therebetween;
each of the rotating tabs rotatable between a first position wherein the rotating tabs extend generally perpendicular to the longitudinal axis of the slot and are configured to permit insertion and removal of the first data and power port with respect to the slot and a second position wherein the tabs extend generally parallel to the longitudinal axis of the slot and are configured to secure a rim of the slot within the channel to retain the first data and power port within the slot.

5. The system of any of the preceding claims, further comprising:
one or more additional data and power ports, each additional data and power port being capable of providing data and power transmission between the computer and one or more additional weapon-mounted accessories;
wherein each of the one or more additional data and power ports is configured to detachably couple to a slot in a slot rail weapon interface;
wherein the first data and power port and the one or more additional data and power ports are configured to be operably connected to each other to form a serial chain in a custom configuration of data and power ports; and
wherein the custom configuration of data and power ports enables simultaneous data and power transmission between the computer, the accessory connected to the first data and power port, and each of the one or more additional accessories connected to the one or more additional data and power ports.

6. The system of any of the preceding claims, in combination with the computer.

7. The system of claim 6, wherein the computer is configured to detachably couple to a slot in the slot rail weapon interface.

8. The system of claim 7, wherein the computer includes a battery pack interface for detachably and operatively coupling a battery pack to the computer, wherein the computer is configured to electrically couple the battery pack to the first data and power port when the battery pack coupled to the battery pack interface.

9. The system of claim 8, in combination with the battery pack.

10. The system of claim 8 or claim 9, wherein the battery pack interface is a Small Tactical Universal Battery (STUB) interface.

11. The system of any of the preceding claims, further comprising a weapon handguard configured to surround a barrel of a weapon, wherein the slot rail weapon interface is disposed on the handguard.

12. The system of claim 11, further comprising a cable for electrically coupling the first data and power port to the computer, wherein at least a portion of the cable is configured to pass within an interior space defined by the handguard.

13. The system of any of the preceding claims, the first data and power port including:
a housing configured to be positioned over the slot in the slot rail weapon interface;
a first retention clip coupled to the housing and configured to detachably engage with a first like slot adjacent the slot;
a second retention clip coupled to the housing and configured to detachably engage with a second like slot which is adjacent the slot and opposite the first like adjacent slot; and
an electrical power and data cable configured to pass through the slot.
